# EUROPEAN PATENT SPECIFICATION

(11) **EP 3 335 476 B1**
(45) Date of publication and mention of the grant of the patent: **29.05.2019**
(21) Application number: 16730524.2
(22) Date of filing: 01.06.2016
(51) Int. Cl.: H04W 24/02, H04W 72/12, H04W 16/14, H04W 84/12, H04W 88/06

(54) **METHOD FOR COMMUNICATION OF WIRELESS ACCESS POINT IDENTIFICATIONS AND RELATED NODE**
VERFAHREN UND GERÄT ZUR KOMMUNIKATION VON DRAHTLOSZUGANGSPUNKTIDENTIFIKATIONEN
PROCÉDÉ COMPRENANT UNE COMMUNICATION D'IDENTIFICATIONS DE POINT D'ACCÈS SANS FIL ET NOEUD ASSOCIÉ

(30) Priority: 14.08.2015 US 201562205371 P
(43) Date of publication of application: 20.06.2018
(73) Proprietor: Telefonaktiebolaget LM Ericsson (PUBL), 164 83 Stockholm (SE)
(72) Inventor: MASINI, Gino Luca, 112 54 Stockholm (SE); MYHRE, Elena, 177 70 Järfälla (SE); DREVÖ, Markus, 582 19 Linköping (SE); ISRAELSSON, Martin, 163 41 Spånga (SE)
(74) Representative: Ericsson
(86) International application number: PCT/SE2016/050513
(87) International publication number: WO 2017/030477

(56) References cited:
- WO-A1-2015/020586
- WO-A1-2015/115953
- ERICSSON: "Setting Up the Xw", 3GPP DRAFT; R3-150740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Santa Cruz, Spain; 20150420 - 20150424 11 April 2015 (2015-04-11), XP050937351, Retrieved from the Internet: URL:http://www.3gpp.org/ftp/Meetings_3GPP_ SYNC/RAN3/Docs/ [retrieved on 2015-04-11]
- "3rd Generation Partnership Project; Technical Specification Group Radio Access Network; Study on Multiple Radio Access Technology (Multi-RAT) joint coordination (Release 13)", 3GPP STANDARD; 3GPP TR 37.870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V13.0.0, 30 June 2015 (2015-06-30), pages 1-24, XP050965918, [retrieved on 2015-06-30]
- INTEL CORPORATION ET AL: "Agreements on LTE-WLAN Radio Level Integration and Interworking Enhancement", 3GPP DRAFT; DRAFT_36300_CRXXX-(REL-12)_R2-152922-WLAN- RUNNING-CR-RAN2_90-V8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Bratislava, Slovakia; 20150420 - 20150424 8 June 2015 (2015-06-08), XP050984079, Retrieved from the Internet: URL:http://www.3gpp.org/ftp/tsg_ran/WG2_RL 2/TSGR2_90/Docs/ [retrieved on 2015-06-08]

## Description

### TECHNICAL FIELD

The present disclosure relates generally to communications, and more particularly to communications involving wireless access points and related nodes.

### BACKGROUND

The disclosure herein is provided in the context of integration of LTE and WLAN. It should be understood that embodiments described herein may also be applicable to wireless access networks and User Equipment (UE) implementing other access technologies and standards. LTE and WLAN are used as example technologies where some embodiments are suitable, and discussion of LTE and WLAN herein may be useful to understand some embodiments.

LTE and WLAN aggregation (LWA) is a feature where a wireless terminal (also referred to as a mobile terminal, a UE, a user equipment, a user equipment node, etc.) may receive and transmit using radio links with both an eNB (also referred to as base stations) and a WLAN access point AP, and LWA is currently being standardized by 3GPP in Release 13 as part of [RP-150510], revised in [RP-151114]. In a split bearer architecture option (denoted also as 3C) of LTE/WLAN aggregation, the downlink data is split on the PDCP layer in the eNB. The eNB may route PDCP PDUs dynamically via eNB RLC to the UE directly, or via a backhaul channel to WLAN and then to the UE. In a separate bearer architecture (also denoted 2C), lower layers of a bearer are switched to LTE or WLAN meaning all PDCP packets of that bearer are routed via either LTE or WLAN side.

Patent applications WO2015/115953 A1 and WO2015/020586 A1, as well as the 3GPP document R3-150740, provide further relevant prior art.

### SUMMARY

The invention is defined by independent claims 1 and 8. Embodiments of the invention is defined in the dependent claims.

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. The embodiments disclosed in the following description which are not covered by the appended claims are considered as not being part of the present invention but as constituting examples useful for understanding the invention.

In the drawings:
Figure 1 is a is a message diagram illustrating a signaling flow according to some embodiments of inventive concepts;
Figure 2 is a table illustrating an eNB-BSSID association in a wireless terminal according to some embodiments of inventive concepts;
Figure 3 is a message diagram illustrating a signaling flow according to some embodiments of inventive concepts;
Figure 4 is a table illustrating an ECGI-BSSID association in a wireless terminal according to some embodiments of inventive concepts;
Figure 5 is a messaging diagram illustrating a signaling flow according to some embodiments of inventive concepts;
Figure 6 illustrates a structure for a BSSID list filtering information element to indicate whether BSSID list filtering is enabled according to some embodiments of inventive concepts;
Figure 7 illustrates a structure for a maximum WT update periodicity information element according to some embodiments of inventive concepts;
Figure 8 is a block diagram illustrating a protocol architecture of LTE WLAN Aggregation;
Figure 9 is a schematic diagram illustrating a communication network including base stations coupled to WLAN termination nodes and WLAN access points according to some embodiments of inventive concepts;
Figure 10 is a block diagram illustrating a WLAN termination node of Figure 9;
Figure 11 is a block diagram illustrating a base station of Figure 9;
Figure 12 is a block diagram illustrating an access point of Figure 9;
Figure 13 is a block diagram illustrating a wireless terminal of Figure 9;
Figure 14 is a messaging diagram illustrating a signaling flow to set up an Xw according to some embodiments of inventive concepts;
Figure 15 is a flow chart illustrating operations of termination nodes and Figure 16 is a block diagram illustrating related modules according to some embodiments of inventive concepts; and
Figures 17A and 17B are flow charts illustrating operations of communication nodes and Figure 18 is a block diagram illustrating related modules according to some embodiments of inventive concepts.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment. The scope of the invention is defined by the appended claims.

Although various embodiments are disclosed herein in the context of being performed by a UE and/or a network node, they are not limited thereto and instead can be performed in any type of electronic communication device or system.

Note that although terminology from LTE and WLAN is generally used in this disclosure to exemplify embodiments of inventive concepts, this should not be seen as limiting the scope of inventive concepts to only these systems. Other wireless systems, including variations and successors of 3GPP LTE and WCDMA systems, WiMAX (Worldwide Interoperability for Microwave Access), 1MB (Ultra Mobile Broadband), HSDPA (High-Speed Downlink Packet Access), GSM (Global System for Mobile Communications), etc., may also benefit from exploiting embodiments of present inventive concepts disclosed herein.

Also note that terminology such as base station (also referred to as NodeB, eNB, eNodeB, or Evolved Node B) and wireless terminal or mobile terminal (also referred to as User Equipment, User Equipment node, or UE) should be considered as non-limiting and does not imply a certain hierarchical relation between the two. In general, a base station (e.g., a "NodeB" or "eNodeB") and a wireless terminal (e.g., a "UE") may be considered as examples of respective different communications devices that communicate with each other over a wireless radio channel.

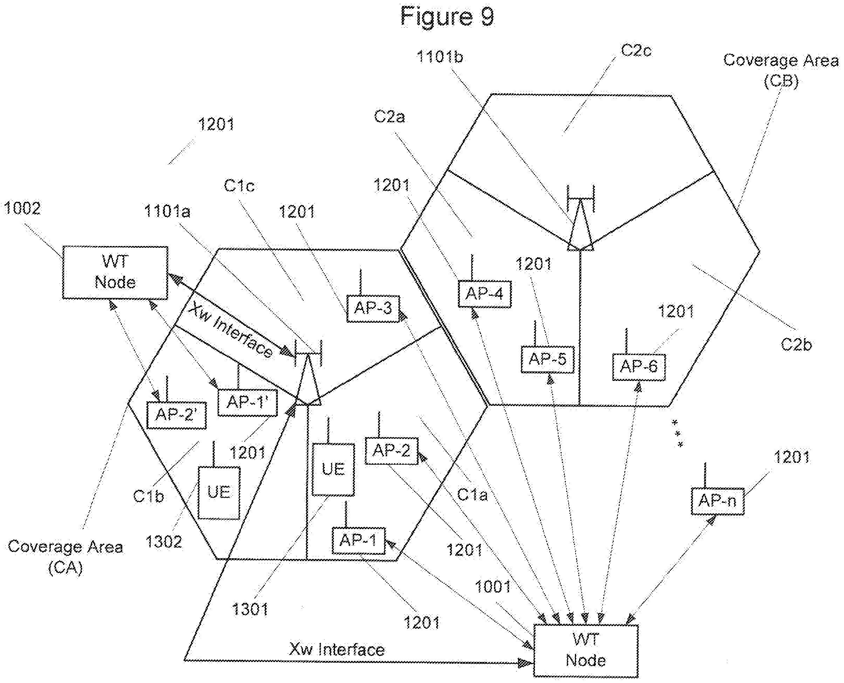

Figure 9 is a schematic diagram illustrating base stations (e.g., eNBs or eNodeBs) 1101a and 1101b of a cellular mobile communications network, wherein base stations 1101a/1101b may be coupled through WLAN termination (WT) nodes 1001 and 1002 to WLAN access points 1201. Each base station 1 101a/1101b may provide service over a respective coverage area CA/CB that may be divided into respective cells. For example, base station 1101a may provide coverage over respective cells C1a, C1b, and C1c making up coverage area CA, and base station 1101b may provide coverage over respective cells C2a, C2b, and C2c making up coverage area CA. Base station 1101a may thus provide uplink and downlink communications with wireless terminal (UE) 1301 through cell C1a, and base station 1101a may provide uplink and downlink communications with wireless terminal (UE) 1302 through cell C1b.

Using LTE-WLAN aggregation (LWA), base station 1101a may configure wireless terminal 1301 to use radio resources of base station 1101a and to use radio resources of one or more of WLAN access points 1201 (e.g., AP-1 and AP-2) through WLAN termination node 1001 while wireless terminal 1301 is in an RRC connected state. Similarly, base station 1101a may configure wireless terminal 1302 to use radio resources of base station 1101a and to use radio resources of one or more of WLAN access points 1201 (e.g., AP-1' and AP-2') through WLAN termination node 1002 while wireless terminal 1302 is in an RRC connected state. Operations of LWA are discussed in greater detail below.

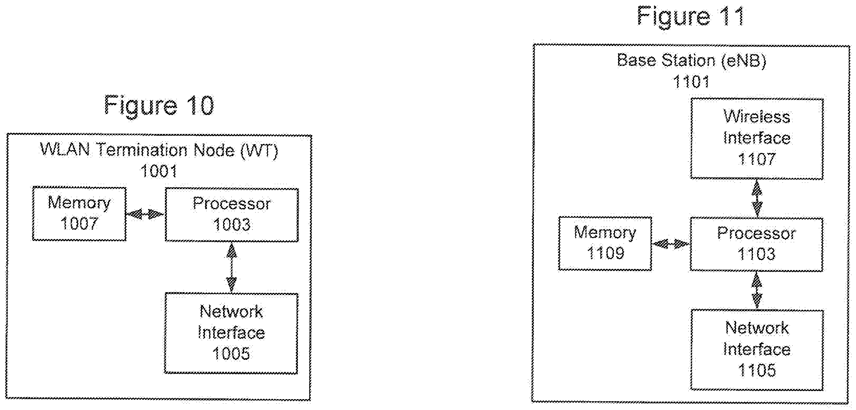

Figure 10 is a block diagram illustrating WLAN termination (WT) node according to some embodiments. As shown, WT node 1001 (or 1002) may include processor 1003 coupled between memory 1007 and network interface 1005, and WT node 1001 may be configured to carry out at least some of the respective functionality described herein. Network interface 1005 may be configured to provide network communications with one or more base stations 1101a and 1101b, and to provide network communications with one or more WLAN APs 1201 (e.g., AP-1, AP-2, ... AP-n for WT node 1001, or AP-1' and AP-2' for WT node 1002). Processor 1003 (also referred to as a processor circuit or processing circuitry) may include one or more data processing circuits, such as a general purpose and/or special purpose processor (e.g., microprocessor and/or digital signal processor). Processor 1003 may be configured to execute computer program instructions from functional modules in memory 1007 (also referred to as a memory circuit or memory circuitry), described below as a computer readable medium, to perform some or all of the operations and methods that are described herein for one or more of the embodiments.

Figure 11 is a block diagram illustrating a base station 1101 of the cellular mobile communication network according to some embodiments. As shown, base station 1101 (e.g., 1101a or 1101b) may include processor 1103 coupled with wireless interface 1107, memory 1109, and network interface 1105, and base station 1101 may be configured to carry out at least some of the respective functionality described herein. Network interface 1105 may be configured to provide network communications with one or more other base stations 1101a/1101b, and to provide network communications with one or more WT nodes 1001/1002. Wireless interface 1107 may be configured to provide wireless communications over cells (e.g., C1a, C1b, and C1c) with wireless terminals (e.g., 1301 and 1302) in a respective coverage area (e.g., CA or CB). Processor 1103 (also referred to as a processor circuit or processing circuitry) may include one or more data processing circuits, such as a general purpose and/or special purpose processor (e.g., microprocessor and/or digital signal processor). Processor 1103 may be configured to execute computer program instructions from functional modules in memory 1109 (also referred to as a memory circuit or memory circuitry), described below as a computer readable medium, to perform some or all of the operations and methods that are described herein for one or more of the embodiments.

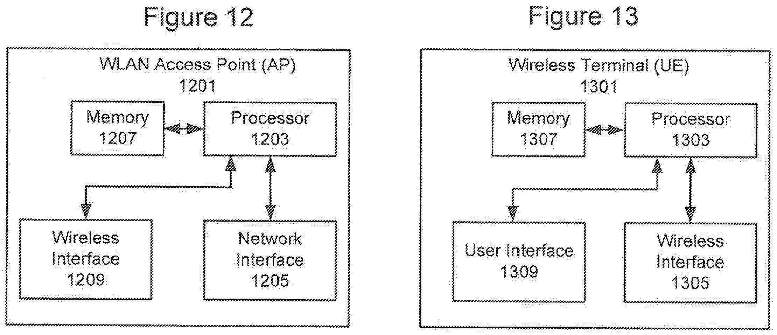

Figure 12 is a block diagram illustrating an access point (AP) 1201 (e.g., a WLAN access point) of a WLAN network according to some embodiments. As shown, AP 1201 (e.g., AP-1, AP-2, ..., AP-n, AP-1', AP-2', etc.) may include processor 1203 coupled with network interface 1205, memory 1207, and wireless interface 1209, and AP 1201 may be configured to carry out at least some of the respective functionality described herein. Network interface 1205 may be configured to provide network communications with one or more WT nodes 1001/1002. Wireless interface 1209 may be configured to provide wireless communications with wireless terminals (e.g., 1301 and 1302) in a respective coverage area of the AP. Processor 1203 (also referred to as a processor circuit or processing circuitry) may include one or more data processing circuits, such as a general purpose and/or special purpose processor (e.g., microprocessor and/or digital signal processor). Processor 1203 may be configured to execute computer program instructions from functional modules in memory 1207 (also referred to as a memory circuit or memory circuitry), described below as a computer readable medium, to perform some or all of the operations and methods that are described herein for one or more of the embodiments.

Figure 13 is a block diagram illustrating a wireless terminal (UE) 1301 (or 1302) that can communicate wirelessly with one or more base stations 1101a/1101b and/or with one or more APs 1201. As shown, wireless terminal 1301 may include processor 1303 coupled with network wireless interface 1305, memory 1307, and user interface 1309 (e.g., including a display, a keypad, a touch sensitive display, a microphone, a speaker, one or more buttons, etc.), and wireless terminal 1301 may be configured to carry out at least some of the respective functionality described herein. User interface 1309 may be configured to provide visual/audio output and/or to accept user input. Wireless interface 1305 may be configured to provide wireless communications with one or more APs 1201 and/or with one or more base stations 1101. Wireless interface 1305 may include an LTE transceiver for communication with base stations 1101 of the cellular mobile communication network, and a WLAN transceiver for communication with APs 1201. Processor 1303 (also referred to as a processor circuit or processing circuitry) may include one or more data processing circuits, such as a general purpose and/or special purpose processor (e.g., microprocessor and/or digital signal processor). Processor 1303 may be configured to execute computer program instructions from functional modules in memory 1307 (also referred to as a memory circuit or memory circuitry), described below as a computer readable medium, to perform some or all of the operations and methods that are described herein for one or more of the embodiments.

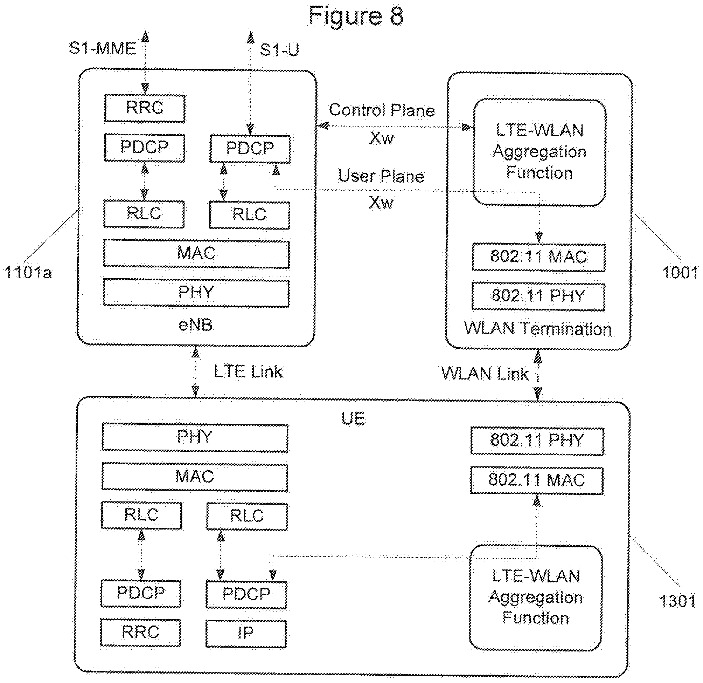

Figure 8 illustrates a protocol architecture for LTE WLAN aggregation. The WLAN termination point (also referred to as a termination node, or WLAN termination node) in the network is denoted WLAN termination (WT) 1001 and may be implemented by a WLAN access point (AP) and/or WLAN access controller (AC) or any other WLAN network node. The interface protocol between eNB 1101a and WT 1001 is denoted Xw. Moreover, an LTE link is shown between eNB 1101a and UE 1301, and a WLAN link is shown between WLAN termination 1001 and UE 1301.

The stage two CR R2-152922 currently captures the following assumptions (not a full list):
- E-UTRAN supports LTE/WLAN aggregation (LWA) operation whereby a UE in an RRC_CONNECTED state may be configured by the eNB to utilize radio resources of LTE and WLAN;
- The eNB supporting LWA may be connected to WLAN via an ideal/internal backhaul in a collocated deployment scenario or a non-ideal backhaul in a non-collocated deployment scenario;
- In a non-collocated scenario, the eNB may be connected to a "WLAN Termination" (WT) logical node;
- The Xw user plane interface (Xw-U) and the Xw control plane interface (Xw-C) may be defined between eNB and WT, together referred to as an Xw interface;
- The UE supporting LWA may be configured by the E-UTRAN to perform WLAN measurements; and/or
- The eNB may provide the UE with identifications for a group of APs (e.g., by providing SSIDs, HESSIDs or BSSIDs for the APs) among which WLAN mobility mechanisms apply while still supporting LWA (i.e., the UE may perform mobility within a group of APs transparent to the eNB). UE mobility across such groups of APs is controlled by the eNB (e.g. based on measurement reports provided by the UE).

In order for the eNB and the WT to activate LWA functionality over the Xw interface, they may need to exchange a basic set of parameters which are useful/necessary to set up the user plane UP and control plane CP. In the intra-LTE case, 2 eNBs set up an X2 interface between them using X2AP [3GPP TS 36.423, TS 36.300]. The interface setup function is provided by the application protocol, but X2AP cannot be reused because the WT does not necessarily reside in an eNB. A new protocol, here called XwAP, may have to be defined between the eNB and the WT for the LWA case.

At interface setup, the eNB and the WT may need to exchange a basic set of identifiers (including, for example, the list of BSSIDs corresponding to the APs connected to the WT so that the eNB may use them for LWA). The same paradigm that is used between eNBs in X2AP may not be usable between the eNB and the WT. In X2AP, the two eNBs exchange their full list of cells at X2 setup, but in this case the exchange of the full list of BSSIDs from the WT may be undesirable. In case the WT is implemented in an AC, it may be possible for several thousands of APs to be connected to it, covering a very large area. In case such area is much greater than the coverage area of the eNB, only a small subset of those APs will actually overlap with the eNB cells and will be of interest for LWA. Any AP not overlapping with the eNB will not be measured by a UE served by the eNB and therefore will never be considered for LWA. Including non-overlapping / non-neighboring APs in the list will result in unnecessary processing and resource burden for the receiving eNB.

The WT is made aware of the coverage area of the eNB, so that when the Xw interface is established between an eNB and the WT, the WT only includes BSSIDs which are relevant (e.g., of interest) to the eNB (e.g., which are deployed in the eNB coverage area). The same criterion may be used when the WT signals a configuration change to the eNB, for example, when APs are added/removed/modified from the set which is connected to the WT itself: only information related to those which are relevant to the eNB will be signaled to the eNB.

The information on eNB coverage area can be obtained, for example, from the Global eNB ID signaled by the eNB in the Xw SETUP REQUEST message, from a list of served cells (and/or neighbor cells) in case it is signaled from the eNB to the WT, and/or from geographical information signaled by the eNB itself to the WT.

Embodiments of inventive concepts may reduce/avoid the need for the eNB to process and store long lists of BSSIDs coming from its WTs. A benefit(s) in terms of scalability, signaling, and/or implementation may be significant. In LWA scenarios, an eNB may overlap with several dozens of APs, which will be connected to one or more WTs, and each WT may reside in an AC, which may serve thousands of APs. Without filtering, the eNB may need to process and store several thousands of BSSIDs at every Xw setup as opposed to only the few dozens with which it may interoperate.

In case of WT configuration update, benefits may be even more evident. For example, there may be no need to initiate a configuration update procedure toward an eNB in case APs are added, removed, and/or modified outside the eNB coverage area.

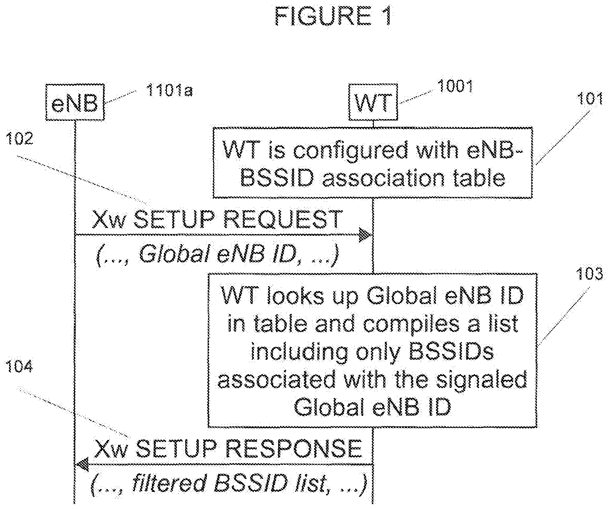

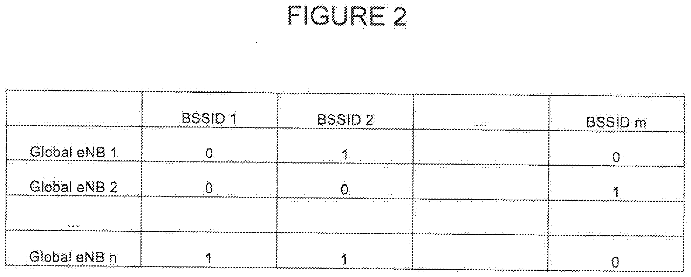

A signaling flow for some embodiments of inventive concepts is described below and shown in Figure 1.
101. The WT (WT node 1001) is configured via e.g. OAM with information about whether its APs are in the coverage area of each eNB. Such information could be organized as an eNB-BSSID association table such as in Figure 2 below, where "0" means "AP not present in eNB coverage area" and 1 means "AP present in eNB coverage area";
102. The eNB initiates the Xw Setup procedure by sending the Xw SETUP REQUEST message toward the WT, including its Global eNB ID as defined in 3GPP TS 36.423;
103. The WT looks up the signaled Global eNB ID in its eNB-BSSID association table, and compiles a list including only the BSSIDs associated with the signaled Global eNB ID; and
104. The WT includes the above "filtered BSSID list" in the Xw SETUP RESPONSE message toward the originating eNB.

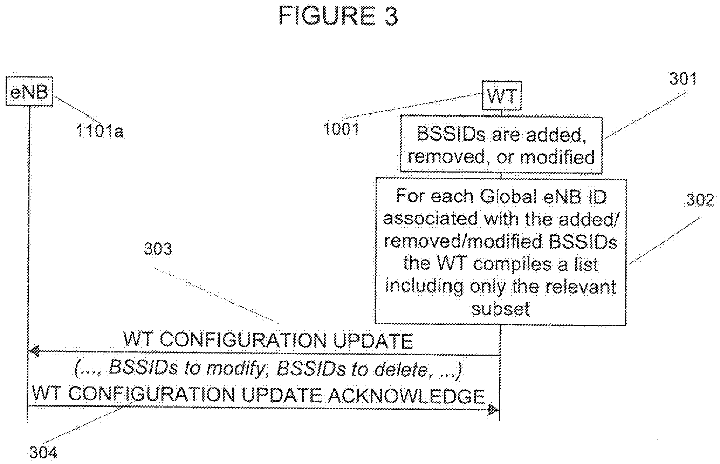

In some other embodiments, BSSIDs are added / removed / modified from the WT configuration. The signaling flow is shown in Figure 3.
301. The WT adds, removes, and/or modifies BSSIDs.
302. The WT looks up the removed or modified BSSIDs in the eNB-BSSID association table and obtains the Global eNB ID(s) associated with them; in case new BSSIDs are added, the corresponding Global eNB ID association is configured via e.g. OAM;
303. For each Global eNB ID associated with the added/removed/modified BSSIDs, the WT initiates a WT Configuration Update procedure by sending a WT CONFIGURATION UPDATE message to the corresponding eNB, including only the subset of the added / removed / modified BSSIDs corresponding to the relevant Global eNB ID. The signaled BSSIDs are organized in separate lists, as BSSIDs to Modify and BSSIDs to Delete;
304. The eNB replies with the WT CONFIGURATION UPDATE ACKNOWLEDGE message, signaling the normal completion of the procedure. In case it is not possible to update the information for the initiating WT, the eNB may reply with the WT CONFIGURATION UPDATE FAILURE message.

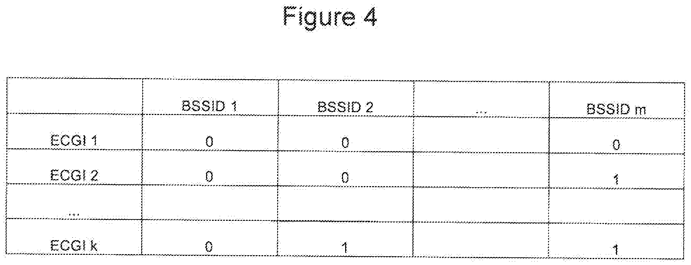

In a still another embodiment, the association table in the WT is organized per-cell instead of per-eNB, i.e. the rows of the table contain ECGIs instead of Global eNB IDs (see Figure 4). The signaling flow for this embodiment is the same as in the previous embodiments, except that the eNB signals a list of its served cells in the Xw SETUP REQUEST message including their ECGIs, and the WT performs lookups according to the ECGI. An advantage of this embodiment may be that it enables more granular filtering especially in case of LTE deployment using e.g. RRUs, which could result in a non-contiguous eNB coverage area, with a possible downside of requiring additional signaling over Xw.

In a yet another embodiment, conceptually similar to the embodiment discussed above with respect to Figure 4, the eNB may also includes a separate list of neighbor cells (e.g. obtained from UE measurements) in the Xw SETUP REQUEST message. This may provide the WT with additional information about eNB deployment when performing BSSID lookup. The signaling flows may be the same as and/or similar to the above.

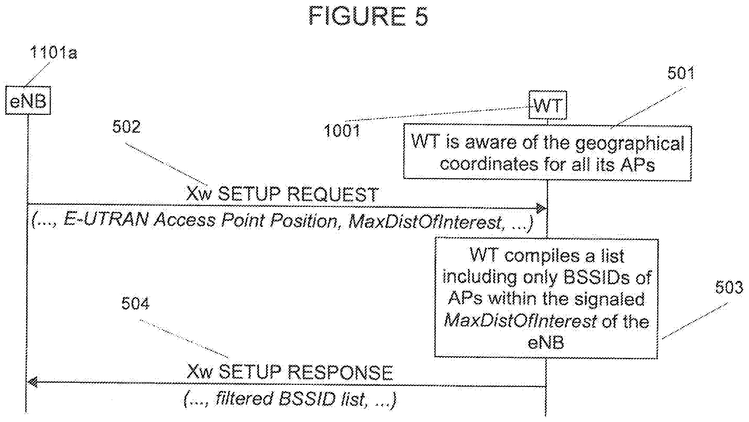

In another embodiment, the eNB-BSSID association table in the WT may be organized according to geographical position (e.g. latitude/longitude/height), where the AP positions are reported by the APs themselves to the WT (e.g. using an on-board GPS receiver), or from previous positioning measurements from associated UEs, or configured via e.g. OAM. The eNB signals its own position in the Xw SETUP REQUEST message (e.g. encoding it as in the E-UTRAN Access Point Position IE [3GPP TS 36.455]), as well as a "maximum distance of interest" (MaxDistOflnterest): the WT may then includes all BSSIDs deployed within that distance of the position signaled by the eNB. A signaling flow for the Xw Setup is shown in Figure 5. A same distance may be maintained as a criterion also for any subsequent WT Configuration Update from the same WT to the same eNB. The signaling flow is shown in Figure 5:
501. The WT is aware of geographical coordinates for all of its APs.
502. The eNB transmits an Xw setup request including an E-UTRAN access point position, and an indication of a maximum distance of interest relative to that position.
503. On receipt of the Xw setup request, the WT compiles a list including only BSSIDs of APs within the signaled maximum distance of the eNB.
504. The WT transmits an Xw setup response including the filtered list of BSSIDs.

In another embodiment, each BSSID in the WT is associated with one or more Tracking Area Codes (TACs), defined as in 3GPP TS 36.300. The eNB includes its TAC in the Xw SETUP REQUEST message, and the WT includes in the Xw SETUP RESPONSE message a filtered list with only those BSSIDs associated with the TAC signaled by the eNB.

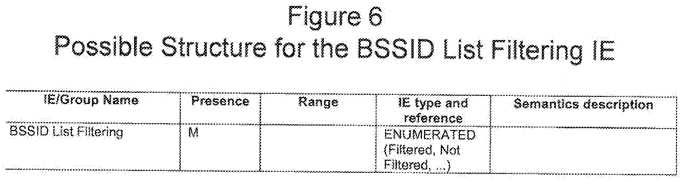

In another embodiment, the eNB indicates to the WT whether it requires the BSSID list to be filtered or not, by including the BSSID List Filtering IE (see Figure 6) in the Xw SETUP REQUEST message.

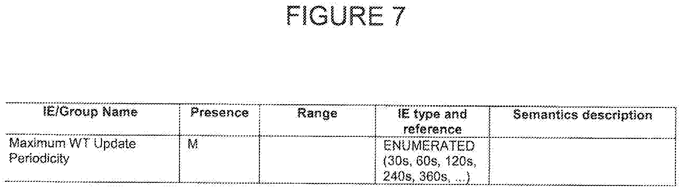

In another embodiment, the eNB indicates to the WT the maximum desired periodicity for WT CONFIGURATION UPDATE messages, by including the Maximum WT Update Periodicity IE (see Figure 7) in the Xw SETUP REQUEST message. This can be especially useful to reduce/avoid signaling overload in case either the eNB or the WT do not support BSSID list filtering: the receiving WT may/shall ensure that the WT Configuration Updates do not exceed the maximum periodicity signaled by the eNB.

Embodiments disclosed herein may thus provide methods for associating WLAN APs to one or more LTE eNBs, organizing such associations in a network node, and/or using such associations to set up network interfaces in an improved/optimal way, to thereby reduce signaling and/or node resource usage.

Further discussion of possible signaling mechanisms to set up Xw and transfer configuration information between the eNB and the WT is provided below.

As discussed in [R3-151638], the eNB may/should initiate Xw setup toward the WT (e.g. following UE measurements). The WT may reply with the list of broadcasted ESSIDs and BSSIDs it supports (included with any radio-related information useful/necessary to set up the relation).

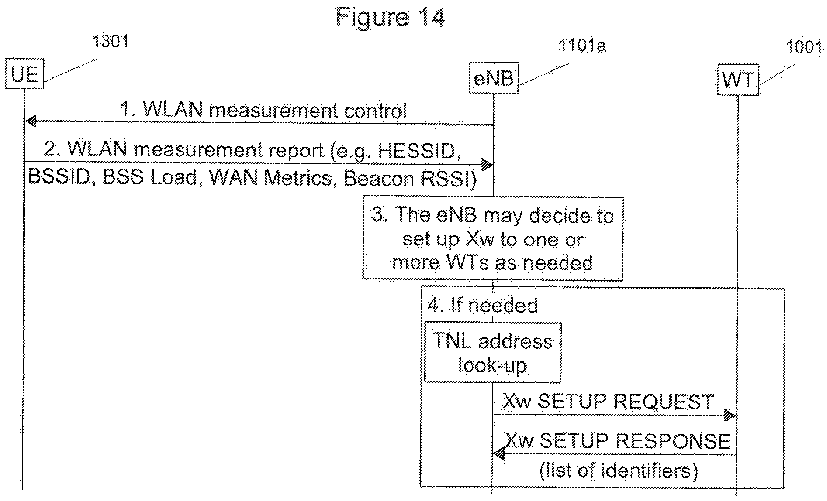

The eNB may initiate the Xw Setup procedure and the WT may reply signaling the list of broadcasted ESSIDs and BSSIDs it supports, included with radio-related information useful/necessary to set up the relation. A possible signaling flow for such a class 1 Xw procedure (normal condition) is shown in Figure 14.

It may also be beneficial to envisage a class 1 WT Configuration Update procedure, to enable a WT to signal a change of configuration to an eNB with which it has a relation. A class 1 WT Configuration Update procedure, to enable a WT to signal configuration change to eNBs, may be beneficial.

It is possible for a WT to have a large number of APs connected (up to several thousands), but only a small subset of those APs will typically be in the coverage area of the eNB. Therefore, it is likely that only a small subset of the BSSID list signaled by the WT will be relevant to the eNB. In order to save processing time and/or resources in the eNB, it may be desirable for the WT to filter the BSSID list, to include only those BSSIDs for APs deployed in the same coverage area of the eNB. This could be done e.g. by looking at the Global eNB ID, TAC, and/or location signaled by the eNB at Xw Setup.

It may thus be desirable for the WT to filter the BSSID list signaled to the eNB at Xw Setup and WT Configuration Update, including only BSSIDs for APs deployed in the coverage area of the eNB (identified e.g. by looking at the Global eNB ID, TAC, and/or location signaled by the eNB at Xw Setup).

In the event of an abnormal failure or at initialization of the Xw interface, the Xw AP UE-related context may need to be set to a defined state. It may be useful to envisage a class 1 Xw Reset procedure. This procedure may/should result in the receiving node aborting any other ongoing procedures but maintaining the application-level configuration data exchanged at interface setup. Both eNB-initiated and WT-initiated Xw Reset procedures may be beneficial. A class 1 Xw Reset procedure may thus be introduced.

Signaling mechanisms to set up and maintain Xw and to exchange information between the eNB and the WT have thus been discussed. For example, the eNB may initiate the Xw Setup procedure and the WT may reply signaling the list of broadcasted ESSIDs and BSSIDs it supports, included with radio-related information useful/necessary to set up the relation. A class 1 WT Configuration Update procedure, to enable a WT to signal configuration change to eNBs, may be provided. It may be desirable for the WT to filter the BSSID list signaled to the eNB at Xw Setup and WT Configuration Update, including only BSSIDs for APs deployed in the coverage area of the eNB (identified e.g. by looking at the Global eNB ID, TAC, and/or location signaled by the eNB at Xw Setup). Moreover, a class 1 Xw Reset procedure may be provided.

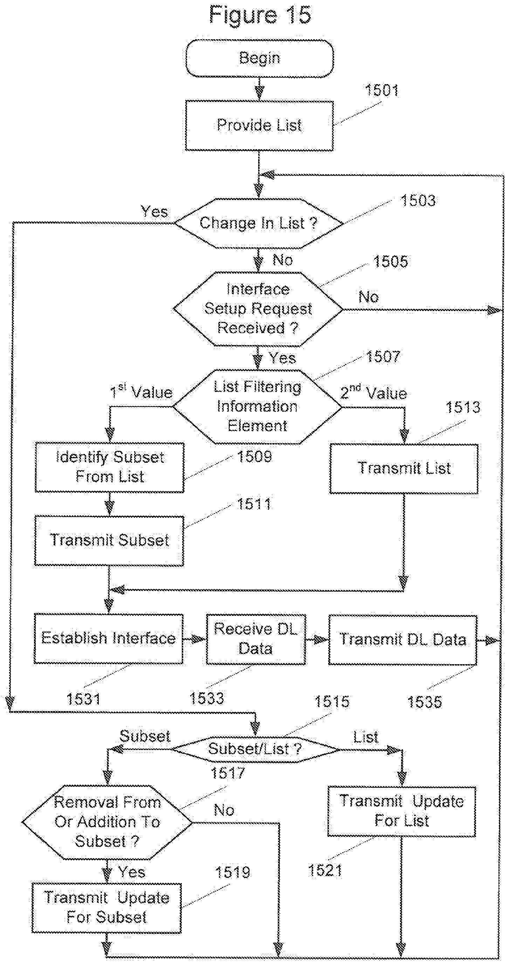

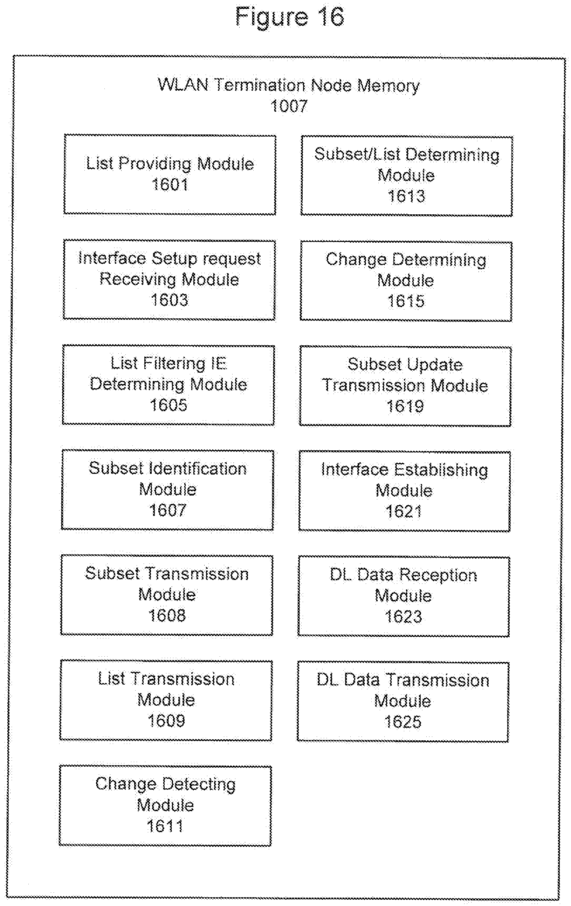

Operations of a termination node 1001 (e.g., an access point controller) will now be discussed with reference to the flow chart of Figure 15 and the modules of Figure 16, with the termination node being connected to a plurality of wireless access points 1201 (e.g., WLAN access points). For example, modules of Figure 16 may be stored in termination node memory 1007 of Figure 10, and these modules may provide instructions so that when the instructions of a module are executed by termination node processor 1003, processor 1003 performs respective operations of the flow chart of Figure 15.

At block 1501 processor 1007 may provide a list of wireless access point identifications (e.g., using instructions of list providing module 1601), with each of the wireless access point identifications corresponding to a respective one of the plurality of wireless access points 1201 connected to the termination node 1001. Processor 1003 may wait at blocks 1503 and 1505 until the list changes or an interface setup request is received. A first interface setup request may be received by processor 1003 (through network interface 1005) at block 1505 (e.g., using instructions of interface setup request receiving module 1603). Responsive to receiving such an interface setup request at block 1505, processor 1003 may determine at block 1507 whether a list filtering information element (IE) of the interface setup request has a first value or a second value (e.g., using instructions of List Filtering IE Determining Module 1605).

Responsive to receiving a first interface setup request from a first communication node 1101a of a wireless communication network at block 1505 and responsive to the list filtering IE having the first value at block 1507, processor 1003 may identify at block 1509 a subset of the wireless access point identifications from the list as being wireless access point identifications for wireless access points that are relevant with respect to first communication node 1101a of the wireless communication network (e.g., using instructions of subset identification module 1607). Identifying the subset at block 1509 may include identifying the subset of the wireless access point identifications from the list as being wireless access point identifications for wireless access points that are in a coverage area of first communication node 1101a of the wireless communication network.

The first interface setup request may also include an identification of first communication node 1101a of the wireless communication network, and identifying the subset of the wireless access point identifications at block 1509 may include identifying the subset of wireless access point identifications based on the identification of first communication node 1101a. For example, the identification of first communication node 1101a may include a global eNB identification, and/or a cell identification, such as a E-UTRAN cell global identifier.

At block 1511, processor 1003 may then transmit the subset of the wireless access point identifications from the list (through network interface 1005) to first communication node 1101a (e.g., using instructions of subset transmission module 1608).

Responsive to receiving a second interface setup request from a second communication node 1101b (through network interface 1005) at block 1505 and responsive to the list filtering IE having the second value at block 1507, processor 1003 may transmit the list of wireless access point identifications (through network interface 1005) to second communication node 1101b without filtering (e.g., using instructions of list transmission module 1609).

Responsive to detecting a change in the list at block 1503 (e.g., using instructions of change detecting module 1611), processor 1003 may determine if a subset of the list or the entire list was last transmitted at block 1515 (e.g., using instructions of subset/list determining module 1613). Responsive to determining at block 1515 that a subset was transmitted, processor 1003 may determine at block 1517 if the change affects the subset (e.g., using instructions of change determining module 1615). For example, processor 1003 may transmit (through network interface 1005) an update at block 1519 (e.g., using instructions of subset update transmission module 1619) to communication node 1101a indicating removal of one of the subset of wireless access point identifications responsive to removing the wireless access point identifications from the subset.

Responsive to determining that a new wireless access point identification has been added to the list after transmitting the subset, processor 1003 may determine at block 1517 if the new wireless access point identification should be included in the subset (e.g., using instructions of change determining module 1615). Responsive to determining that the new wireless access point identification should be included in the subset at block 1517, processor 1003 may transmit an update at block 1519 (through network interface) to communication node 1101a indicating addition of the new wireless access point identification to the subset (e.g., using instructions of subset update transmission module 1619). If processor 1003 determines at block 1517 that the change in the list does affect the subset, no update may be needed.

At block 1531, processor 1003 may establish an interface (e.g., an Xw interface) between termination node 1001 and communication node 1101a/1101b (through network interface 1005) responsive to receiving the respective interface setup request from a communication node (e.g., using instructions of interface establishing module 1621). At block 1533, processor 1003 may receive downlink data over the interface from the respective communication node 1101 after establishing the interface (e.g., using instructions of DL data reception module 1623). At block 1535, processor 1003 may transmit the downlink data (through network interface 1005) to a respective one of wireless access points 1201 for wireless transmission to a wireless terminal after receiving the downlink data (e.g., using instructions of DL data transmission module 1625).

According to some embodiments of Figure 15, the plurality of wireless access points 1201 may provide wireless communications in accordance with a first radio access technology, and each of the communication node/nodes 1101a/1101b of the wireless communication network may be a base station that provides wireless communications in accordance with a second radio access technology different than the first radio access technology. For example, the first radio access technology may be a Wireless Local Area Network (WLAN) access technology, and the second radio access technology may be a Long Term Evolution (LTE) access technology.

Various operations of Figure 15 and/or modules of Figure 16 may be optional with respect to some embodiments of termination nodes and related methods. Regarding methods of example embodiment 1 (set forth below), for example, operations of blocks 1503, 1507, 1509, 1513, 1515, 1517, 1519, 1521, 1531, 1533, and 1535 of Figure 15 may be optional, and regarding related termination nodes, modules, 1605, 1607, 1609, 1611, 1613, 1615, 1619, 1621, 1623, and 1625 may be optional.

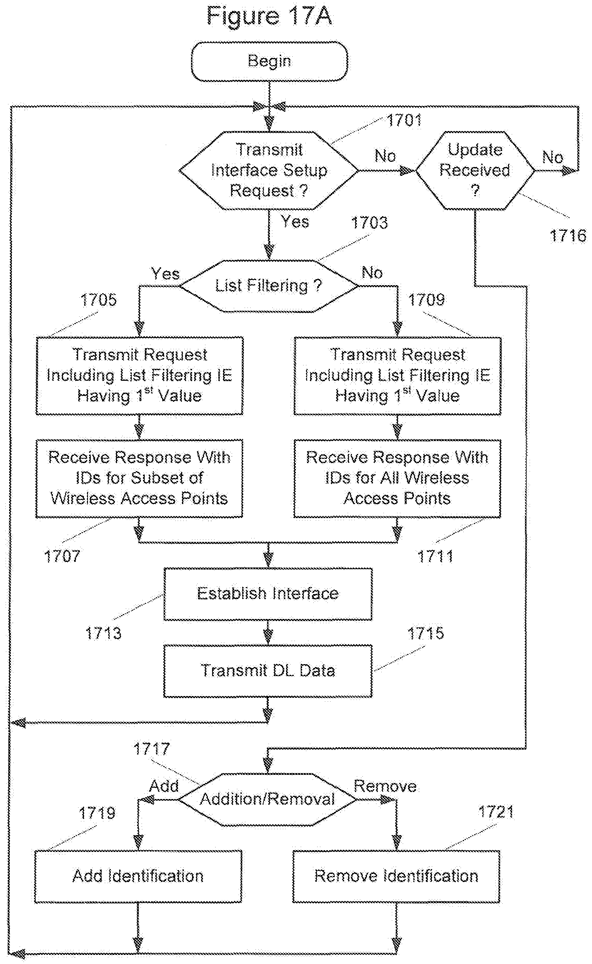

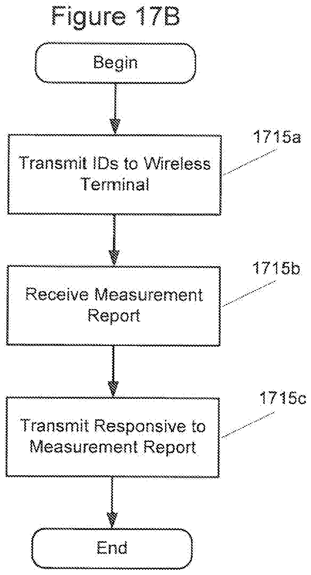

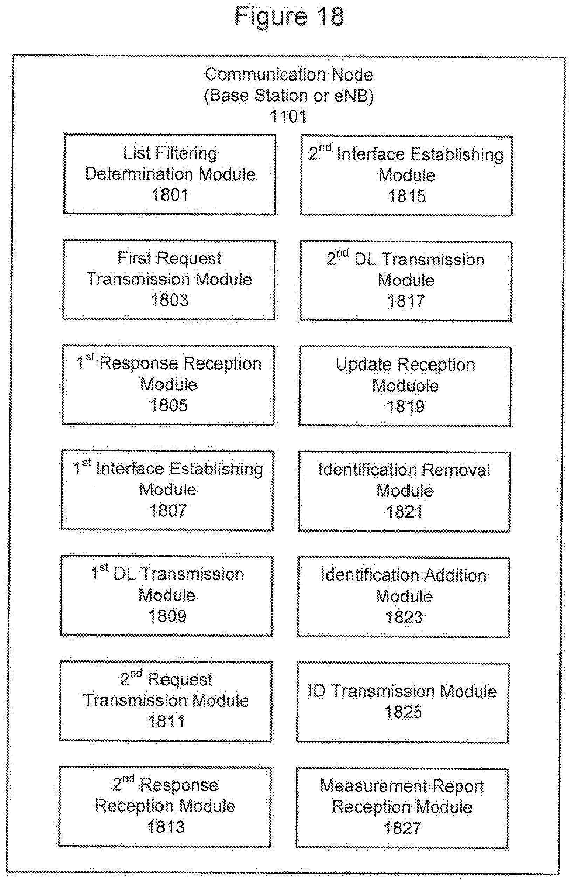

Operations of a communication node 1101 (e.g., a base station or eNB) of a wireless communication network will now be discussed with reference to the flow charts of Figures 17A and 17B and the modules of Figure 18. For example, modules of Figure 18 may be stored in communication node memory 1109 of Figure 11, and these modules may provide instructions so that when the instructions are executed by communication node processor 1103, processor 1103 performs respective operations of the flow chart of Figure 17.

At block 1701, processor 1103 may determine when to transmit an interface setup request. Responsive to determining that a first interface setup request should be transmitted at block 1701, processor 1103 may determine at block 1703 whether list filtering should be applied (e.g., using instructions of list filtering determination module 1801). Responsive to determining that list filtering should be applied at block 1703, processor 1103 may transmit a first interface setup request (through network interface 1105) to first termination node 1001 at block 1705 (e.g., using instructions of first request transmission module 1803), with first termination node 1001 being connected to a plurality of wireless access points 1201, and with the first interface setup request including a list filtering information element having a first value. The interface setup request may include information relating to communication node 1101a, such as an identification of the communication node 1101a.

At block 1707, processor 1103 may then receive a first interface setup response (through network interface 1105) from first termination node 1001 (e.g., using instructions of first response reception module 1805). In particular, the first interface setup response message may include wireless access point identifications for a subset of the plurality of wireless access points connected to the termination node 1001. The subset of the plurality of wireless access points, for example, may include wireless access points that are relevant with respect to the communication node 1101a based on the information relating to the communication node 1101a included in the setup request.

At block 1713, processor 1103 may then establish an interface between the communication node 1101a and first termination node 1001 (through network interface 1105) based on the first interface setup request and/or the first interface setup response (e.g., using instructions of first interface establishing module 1807). After establishing the interface, at block 1715, processor 1103 may transmit downlink data over the interface to first termination node 1001 (through network interface 1105) for downlink transmission through one of the subset of wireless access points 1201 to a wireless terminal 1301 in a coverage area CA of the communication node 1101a (e.g., using instructions of first downlink DL transmission module 1809).

Communication node 1101a of the wireless communication network may be a base station that provides wireless communications in accordance with a first radio access technology, and the plurality of wireless access points 1201 may provide wireless communications in accordance with a second radio access technology (different than the first radio access technology). For example, the first radio access technology may be a Long Term Evolution (LTE) access technology, and wherein the second radio access technology may be a Wireless Local Area Network (WLAN) access technology. Moreover, the interface setup request may be an Xw interface setup request, and the interface setup response may be an Xw interface setup response.

Responsive to determining that a second interface setup request should be transmitted at block 1701, processor 1103 may determine at block 1703 whether list filtering should be applied (e.g., using instructions of list filtering determination module 1801). Responsive to determining that list filtering should not be applied at block 1703, processor 1103 may transmit a second interface setup request (through network interface 1105) to a second termination node 1002 at block 1709 (e.g., using instructions of second request transmission module 1811), with second termination node 1002 being connected to a second plurality of wireless access points 1201, and with the second interface setup request including a list filtering information element having a second value (different than the first value).

At block 1711, processor 1103 may receive (through network interface 1103) a second interface setup response from the second termination node 1002 (e.g., using instructions of second response reception module 1813), with the second interface setup response message including wireless access point identifications for all of the plurality of wireless access points 1201 connected to the second termination node 1002. At block 1713, processor 1103 may establish a second interface (through network interface 1105) between communication node 1101a and second termination node 1002 based on the second interface setup request and/or the second interface setup response (e.g., using instructions of second interface establishing module 1815). After establishing the second interface, processor 1103 may transmit downlink data (through network interface 1105) over the second interface to second termination node 1002 at block 1715 (e.g., using instructions of second downlink transmission module 1817) for downlink transmission through one of the wireless access points 1201 to a wireless terminal 1302 in a coverage area CA of the communication node 1101a.

At block 1716, processor 1103 may receive an update (through network interface) from a termination node 1001/1002 (e.g., using instructions of update reception module 1819). Responsive to determining at block 1717 that the update indicates removal, processor 1103 may remove an indicated wireless access point identification from the subset/list of wireless access point identifications for the respective termination node at block 1721 (e.g., using instructions of identification removal module 1821). Responsive to determining at block 1717 that the update indicates addition, processor 1103 may add an indicated wireless access point identification to the subset/list of wireless access point identifications for the respective termination node at block 1719 (e.g., using instructions of identification addition module 1823).

Operations of block 1715 will now be discussed in greater detail with respect to Figure 17B. At block 1715a, processor 1103 may transmit the wireless access point identifications from the interface setup response (through wireless interface 1107) to wireless terminal 1301 in the coverage area of communication node 1101a (e.g., using instructions of identification transmission module 1825). At block 1715b, processor 1105 may receive a measurement report from wireless terminal 1301 (through wireless interface 1107) regarding at least one of the subset of the plurality of wireless access points (e.g., using instructions of measurement report reception module 1827), wherein transmitting the downlink data over the interface at block 1715 includes transmitting the downlink data over the interface responsive to the measurement report received from the wireless terminal at block 1715c (e.g., using instructions of DL transmission module 1809 or 1817). For example, transmitting downlink data over the interface for downlink transmission to wireless terminal 1301 may include transmitting the downlink data over the interface while wireless terminal 1301 is in an RRC_Connected state with respect to communication node 1101a.

Various operations of Figure 17A/B and/or modules of Figure 18 may be optional with respect to some embodiments of communication nodes and related methods. Regarding methods of example embodiment 28 (set forth below), for example, operations of blocks 1701, 1703, 1709, 1711, 1715a, 1715b, 1715c 1716, 1717, 1719, and 1721 of Figure 17A/B may be optional, and regarding related communication nodes, modules 1801, 1811, 1813, 1815, 1817, 1819, 821, 1823, 1825, and 1827 may be optional.

**Abbreviations**

| Abbreviation | Explanation |
|---|---|
| 3GPP | 3rd Generation Partnership Project |
| AC | WLAN AP Controller |
| ANR | Autonomous Network Relation setup |
| AP | WLAN Access Point |
| BSSID | Basic Service Set IDentifier |
| CP | Control Plane |
| ECGI | E-UTRAN Cell Global Identifier |
| eNB | Evolved Node B |
| E-UTRAN | Evolved Universal Terrestrial Radio Access Network |
| GPS | Global Positioning System |
| IE | Information Element |
| IP | Internet Protocol |
| MAC | Media Access Control |
| MME | Mobility Management Entity |
| LTE | Long Term Evolution |
| LWA | LTE-WLAN Aggregation |
| OAM | Operations and Maintenance |
| PDCP | Packet Data Convergence Protocol |
| PDU | Packet Data Unit |
| PHY | Physical Layer |
| RLC | Radio Link Control |
| RRC | Radio Resource Control |
| RRU | Remote Radio Unit |
| SCTP | Stream Control Transport Protocol |
| TAC | Tracking Area Code |
| UE | User Equipment |
| UP | User Plane |
| X2AP | X2 Application Protocol |
| XwAP | Xw Application Protocol |
| WLANWireless | Local Area Network |
| WT | WLAN Termination |

### References

3GPP TR 37.870;
3GPP TS 36.423;
3GPP TS 36.300;
3GPP TS 36.455;
3GPP R2-152922, "Agreements on LTE-WLAN Radio Level Integration and Interworking Enhancement", Intel Corporation, China Telecom, Qualcomm Incorporated;
R3-151638, "WT Address Look-Up",Ericsson;
RP-150510, "New WI Proposal: LTE-WLAN Radio Level Integration and Interworking Enhancement";
RP-151114, "Revised WID: LTE-WLAN Radio Level Integration and Interworking Enhancement".

### Further Definitions and Embodiments

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

The scope of the invention is defined by the appended claims.

## Claims

1. A method of operating a termination node (1001) connected to a plurality of wireless access points (1201), the method comprising:
providing (1501) a list of wireless access point identifications, wherein each of the wireless access point identifications corresponds to a respective one of the plurality of wireless access points (1201) connected to the termination node (1001);
receiving (1505) an interface setup request at the termination node (1001) from a communication node (1101a) of a wireless communication network, wherein the plurality of wireless access points (1201) provide wireless communications in accordance with a first radio access technology, and wherein the communication node (1101a) comprises a base station that provides wireless communications in accordance with a second radio access technology different than the first radio access technology; and
responsive to receiving the interface setup request from the communication node (1101a) of the wireless communication network, transmitting (1511) a subset of the wireless access point identifications from the list to the communication node (1001),
wherein responsive to receiving the interface setup request at the termination node (1001), identifying (1509) the subset of the wireless access point identifications from the list as being wireless access point identifications for wireless access points that are relevant with respect to the communication node (1101a) of the wireless communication network, and **characterized in that** identifying the subset comprises identifying the subset of the wireless access point identifications from the list as being wireless access point identifications for wireless access points that are in a coverage area of the communication node (1101a) of the wireless communication network.

2. The method of Claim 1 wherein the interface setup request includes an identification of the communication node (1101a) of the wireless communication network, and wherein identifying the subset of the wireless access point identifications comprises identifying the subset of wireless access point identifications based on the identification of the communication node (1101a).

3. The method of any of Claims 1-2 further comprising:
responsive to removing one of the subset of wireless access point identifications from the list after transmitting the subset, transmitting (1519) an update to the communication node (1101a) indicating removal of the one of the subset of wireless access point identifications.

4. The method of any of Claims 1-3 further comprising:
responsive to adding a new wireless access point identification to the list after transmitting the subset, determining (1517) if the new wireless access point identification should be included in the subset; and
responsive to determining that the new wireless access point identification should be included in the subset, transmitting (1519) an update to the communication node (1101a) indicating addition of the new wireless access point identification.

5. The method of any of Claims 1-4, wherein the first radio access technology is a Wireless Local Area Network, WLAN, access technology, and wherein the second radio access technology is a Long Term Evolution, LTE, access technology.

6. The method of any of Claims 1-5 further comprising:
responsive to receiving the interface setup request, establishing (1531) an interface between the termination node (1001) and the communication node (1101a); and
after establishing the interface, receiving (1533) downlink data over the interface from the communication node (1101a); and
after receiving the downlink data, transmitting (1535) the downlink data to a respective one of the wireless access points (1201) for wireless transmission to a wireless terminal.

7. The method of Claim 6 wherein the interface comprises an Xw interface.

8. A termination node (1001) for use in connection with a plurality of wireless access points (1201), wherein the termination node is adapted to:
provide a list of wireless access point identifications, wherein each of the wireless access point identifications corresponds to a respective one of the plurality of wireless access points (1201) connected to the termination node (1001);
receive an interface setup request at the termination node (1001) from a communication node (1101a) of a wireless communication network, wherein the plurality of wireless access points (1201) provide wireless communications in accordance with a first radio access technology, and wherein the communication node (1101a) comprises a base station that provides wireless communications in accordance with a second radio access technology different than the first radio access technology; and
transmit a subset of the wireless access point identifications from the list to the communication node (1001) responsive to receiving the interface setup request from the communication node (1101a) of the wireless communication network, wherein the termination node is further adapted to:
identify the subset of the wireless access point identifications from the list as being wireless access point identifications for wireless access points that are relevant with respect to the communication node (1101a) of the wireless communication network responsive to receiving the interface setup request at the termination node (1001) and **characterized in that** identifying the subset comprises identifying the subset of the wireless access point identifications from the list as being wireless access point identifications for wireless access points that are in a coverage area of the communication node (1101a) of the wireless communication network.

9. The termination node (1001) of Claim 8 wherein the interface setup request includes an identification of the communication node (1101a) of the wireless communication network, and wherein identifying the subset of the wireless access point identifications comprises identifying the subset of wireless access point identifications based on the identification of the communication node (1101a).

10. The termination node (1001) of any of Claims 8-9 wherein the termination node is further adapted to:
transmit an update to the communication node (1101a) indicating removal of one of the subset of wireless access point identifications responsive to removing one of the subset of wireless access point identifications from the list after transmitting the subset.

11. The termination node (1001) of any of Claims 8-10 wherein the termination node is further adapted to:
determine if a new wireless access point identification should be included in the subset responsive to adding the new wireless access point identification to the list after transmitting the subset; and
transmit an update to the communication node (1101a) indicating addition of the new wireless access point identification responsive to determining that the new wireless access point identification should be included in the subset.

12. The termination node (1001) of any of Claims 8-11, wherein the first radio access technology is a Wireless Local Area Network, WLAN, access technology, and wherein the second radio access technology is a Long Term Evolution, LTE, access technology.

13. The termination node (1001) of any of Claims 8-12, wherein the termination node is further adapted to:
establish an interface between the termination node (1001) and the communication node (1101a) responsive to receiving the interface setup request; and
receive downlink data over the interface from the communication node (1101a) after establishing the interface; and
transmit the downlink data to a respective one of the wireless access points (1201) for wireless transmission to a wireless terminal after receiving the downlink data.

14. The termination node (1001) of Claim 13 wherein the interface comprises an Xw interface.

## Patentansprüche

1. Verfahren zum Betreiben eines Abschlussknotens (1001), der mit einer Mehrzahl von drahtlosen Zugangspunkten (1201) verbunden ist, wobei das Verfahren umfasst:
Bereitstellen (1501) einer Liste von Identifikationen drahtloser Zugangspunkte, wobei jede der Identifikationen drahtloser Zugangspunkte einem jeweiligen der Mehrzahl von drahtlosen Zugangspunkten (1201) entspricht, die mit dem Abschlussknoten (1002) verbunden sind;
Empfangen (1505) einer Schnittstelleneinrichtungsanforderung am Abschlussknoten (1001) von einem Kommunikationsknoten (1101a) eines drahtlosen Kommunikationsnetzwerks, wobei die Mehrzahl von drahtlosen Zugangspunkten (1201) drahtlose Kommunikation gemäß einer ersten Funkzugangstechnologie bereitstellt, und wobei der Kommunikationsknoten (1101a) eine Basisstation umfasst, die drahtlose Kommunikation gemäß einer zweiten Funkzugangstechnologie bereitstellt, die von der ersten Funkzugangstechnologie verschieden ist; und
Senden (1511) in Reaktion auf das Empfangen der Schnittstelleneinrichtungsanforderung vom Kommunikationsknoten (1101a) des drahtlosen Kommunikationsnetzwerks eines Teilsatzes der Identifikationen drahtloser Zugangspunkte aus der Liste an den Kommunikationsknoten (1001),
wobei in Reaktion auf das Empfangen der Schnittstelleneinrichtungsanforderung am Abschlussknoten (1001) der Teilsatz der Identifikationen drahtloser Zugangspunkte aus der Liste als Identifikationen drahtloser Zugangspunkte für drahtlose Zugangspunkte identifiziert wird (1509), die in Bezug auf den Kommunikationsknoten (1101a) des drahtlosen Kommunikationsnetzwerks relevant sind, und **dadurch gekennzeichnet, dass**
das Identifizieren des Teilsatzes ein Identifizieren des Teilsatzes der Identifikationen drahtloser Zugangspunkte aus der Liste als Identifikationen drahtloser Zugangspunkte für drahtlose Zugangspunkte umfasst, die in einem Versorgungsbereich des Kommunikationsknotens (1101a) des drahtlosen Kommunikationsnetzwerks sind.

2. Verfahren nach Anspruch 1, wobei die Schnittstelleneinrichtungsanforderung eine Identifikation des Kommunikationsknotens (1101a) des drahtlosen Kommunikationsnetzwerks umfasst, und wobei das Identifizieren des Teilsatzes der Identifikationen drahtloser Zugangspunkte ein Identifizieren des Teilsatzes von Identifikationen drahtloser Zugangspunkte basierend auf der Identifikation des Kommunikationsknotens (1101a) umfasst.

3. Verfahren nach einem der Ansprüche 1 bis 2, ferner umfassend:
Senden (1519) in Reaktion auf ein Entfernen einer des Teilsatzes von Identifikationen drahtloser Zugangspunkte aus der Liste nach dem Senden des Teilsatzes einer Aktualisierung mit der Angabe der Entfernung der einen des Teilsatzes von Identifikationen drahtloser Zugangspunkte an den Kommunikationsknoten (1101a).

4. Verfahren nach einem der Ansprüche 1 bis 3, ferner umfassend:
Bestimmen (1517) in Reaktion auf ein Hinzufügen einer neuen Identifikation eines drahtlosen Zugangspunktes zur Liste nach dem Senden des Teilsatzes, ob die neue Identifikation des drahtlosen Zugangspunktes in den Teilsatz aufgenommen werden sollte; und
Senden (1519) in Reaktion auf ein Bestimmen, dass die neue Identifikationen des drahtlosen Zugangspunktes in den Teilsatz aufgenommen werden sollte, einer Aktualisierung mit der Angabe der Hinzufügung der neuen Identifikation des drahtlosen Zugangspunktes an den Kommunikationsknoten (1101a).

5. Verfahren nach einem der Ansprüche 1 bis 4, wobei die erste Funkzugangstechnologie eine WLAN (drahtloses lokales Netzwerk)-Zugangstechnologie ist, und wobei die zweite Funkzugangstechnologie eine LTE (Long Term Evolution)-Zugangstechnologie ist.

6. Verfahren nach einem der Ansprüche 1 bis 5, ferner umfassend:
Erstellen (1531) einer Schnittstelle zwischen dem Abschlussknoten (1001) und dem Kommunikationsknoten (1101a) in Reaktion auf das Empfangen der Schnittstelleneinrichtungsanforderung; und
Empfangen (1533) von Downlink-Daten über die Schnittstelle vom Kommunikationsknoten (1101a) nach dem Erstellen der Schnittstelle; und
Senden (1535) der Downlink-Daten nach dem Empfangen der Downlink-Daten an einen jeweiligen der drahtlosen Zugangspunkte (1201) zur drahtlosen Übertragung an ein drahtloses Endgerät.

7. Verfahren nach Anspruch 6, wobei die Schnittstelle eine Xw-Schnittstelle umfasst.

8. Abschlussknoten (1001) zur Verwendung bei der Verbindung mit einer Mehrzahl von drahtlosen Zugangspunkten (1201), wobei der Abschlussknoten ausgelegt ist zum:
Bereitstellen einer Liste von Identifikationen drahtloser Zugangspunkte, wobei jede der Identifikationen drahtloser Zugangspunkte einem jeweiligen der Mehrzahl von drahtlosen Zugangspunkten (1201) entspricht, die mit dem Abschlussknoten (1001) verbunden sind;
Empfangen einer Schnittstelleneinrichtungsanforderung am Abschlussknoten (1001) von einem Kommunikationsknoten (1101a) eines drahtlosen Kommunikationsnetzwerks, wobei die Mehrzahl von drahtlosen Zugangspunkten (1201) drahtlose Kommunikation gemäß einer ersten Funkzugangstechnologie bereitstellt, und wobei der Kommunikationsknoten (1101a) eine Basisstation umfasst, die drahtlose Kommunikation gemäß einer zweiten Funkzugangstechnologie bereitstellt, die von der ersten Funkzugangstechnologie verschieden ist; und
Senden eines Teilsatzes der Identifikationen drahtloser Zugangspunkte aus der Liste an den Kommunikationsknoten (1001) in Reaktion auf das Empfangen der Schnittstelleneinrichtungsanforderung vom Kommunikationsknoten (1101a) des drahtlosen Kommunikationsnetzwerks, wobei der Abschlussknoten ferner ausgelegt ist zum:
Identifizieren des Teilsatzes der Identifikationen drahtloser Zugangspunkte aus der Liste als Identifikationen drahtloser Zugangspunkte für drahtlose Zugangspunkte, die in Bezug auf den Kommunikationsknoten (1101a) des drahtlosen Kommunikationsnetzwerks relevant sind, in Reaktion auf das Empfangen der Schnittstelleneinrichtungsanforderung am Abschlussknoten (1001), und **dadurch gekennzeichnet, dass**
das Identifizieren des Teilsatzes ein Identifizieren des Teilsatzes der Identifikationen drahtloser Zugangspunkte aus der Liste als Identifikationen drahtloser Zugangspunkte für drahtlose Zugangspunkte umfasst, die in einem Versorgungsbereich des Kommunikationsknotens (1101a) des drahtlosen Kommunikationsnetzwerks sind.

9. Abschlussknoten (1001) nach Anspruch 8, wobei die Schnittstelleneinrichtungsanforderung eine Identifikation des Kommunikationsknotens (1101a) des drahtlosen Kommunikationsnetzwerks umfasst, und wobei das Identifizieren des Teilsatzes der Identifikationen drahtloser Zugangspunkte ein Identifizierten des Teilsatzes von Identifikationen drahtloser Zugangspunkte basierend auf der Identifikation des Kommunikationsknotens (1101a) umfasst.

10. Abschlussknoten (1001) nach einem der Ansprüche 8 bis 9, wobei der Abschlussknoten ferner ausgelegt ist zum:
Senden einer Aktualisierung mit der Angabe der Entfernung einer des Teilsatzes von Identifikationen drahtloser Zugangspunkte an den Kommunikationsknoten (1101a) in Reaktion auf ein Entfernen einer des Teilsatzes von Identifikationen drahtloser Zugangspunkte aus der Liste nach dem Senden des Teilsatzes.

11. Abschlussknoten (1001) nach einem der Ansprüche 8 bis 10, wobei der Abschlussknoten ferner ausgelegt ist zum:
Bestimmen, ob eine neue Identifikation eines drahtlosen Zugangspunktes in den Teilsatz aufgenommen werden sollte, in Reaktion auf ein Hinzufügen der neuen Identifikation des drahtlosen Zugangspunktes zur Liste nach dem Senden des Teilsatzes; und
Senden einer Aktualisierung mit der Angabe der Hinzufügung der neuen Identifikationen des drahtlosen Zugangspunktes an den Kommunikationsknoten (1101a) in Reaktion auf ein Bestimmen, dass die neue Identifikationen des drahtlosen Zugangspunkte in den Teilsatz aufgenommen werden sollte.

12. Abschlussknoten (1001) nach einem der Ansprüche 8 bis 11, wobei die erste Funkzugangstechnologie eine WLAN (drahtloses lokales Netzwerk)-Zugangstechnologie ist, und wobei die zweite Funkzugangstechnologie eine LTE (Long Term Evolution)-Zugangstechnologie ist.

13. Abschlussknoten (1001) nach einem der Ansprüche 8 bis 12, wobei der Abschlussknoten ferner ausgelegt ist zum:
Erstellen einer Schnittstelle zwischen dem Abschlussknoten (1001) und dem Kommunikationsknoten (1101a) in Reaktion auf das Empfangen der Schnittstelleneinrichtungsanforderung; und
Empfangen von Downlink-Daten über die Schnittstelle vom Kommunikationsknoten (1101a) nach dem Erstellen der Schnittstelle; und
Senden der Downlink-Daten nach dem Empfangen der Downlink-Daten an einen jeweiligen der drahtlosen Zugangspunkte (1201) zur drahtlosen Übertragung an ein drahtloses Endgerät.

14. Abschlussknoten (1001) nach Anspruch 13, wobei die Schnittstelle eine Xw-Schnittstelle umfasst.

## Revendications

1. Procédé de fonctionnement d'un noeud de terminaison (1001) connecté à une pluralité de points d'accès sans fil (1201), le procédé comprenant :
la fourniture (1501) d'une liste d'identifications de points d'accès sans fil, dans lequel chacune des identifications de points d'accès sans fil correspond à l'un respectif de la pluralité de points d'accès sans fil (1201) connectés au noeud de terminaison (1001) ;
la réception (1505) d'une demande de configuration d'interface au noeud de terminaison (1001) en provenance d'un noeud de communication (1101a) d'un réseau de communication sans fil, dans lequel la pluralité de points d'accès sans fil (1201) fournissent des communications sans fil en fonction d'une première technologie d'accès radio, et dans lequel le noeud de communication (1101a) comprend une station de base qui fournit des communications sans fil en fonction d'une deuxième technologie d'accès radio différente de la première technologie d'accès radio ; et
en réponse à la réception de la demande de configuration d'interface en provenance du noeud de communication (1101a) du réseau de communication sans fil, la transmission (1511) d'un sous-ensemble des identifications de points d'accès sans fil de la liste au noeud de communication (1001),
dans lequel, en réponse à la réception de la demande de configuration d'interface au noeud de terminaison (1001), l'identification (1509) du sous-ensemble d'identifications de points d'accès sans fil de la liste comme étant des identifications de points d'accès sans fil pour des points d'accès sans fil qui sont pertinents pour le noeud de communication (1101a) du réseau de communication sans fil, et **caractérisé en ce que**
l'identification du sous-ensemble comprend l'identification du sous-ensemble des identifications de points d'accès sans fil de la liste comme étant des identifications de points d'accès sans fil pour des points d'accès sans fil qui sont dans une zone de couverture du noeud de communication (1101a) du réseau de communication sans fil.

2. Procédé selon la revendication 1, dans lequel la demande de configuration d'interface inclut une identification du noeud de communication (1101a) du réseau de communication sans fil, et dans lequel l'identification du sous-ensemble des identifications de points d'accès sans fil comprend l'identification du sous-ensemble d'identifications de points d'accès sans fil sur la base de l'identification du noeud de communication (1101a) .

3. Procédé selon la revendication 1 ou 2, comprenant en outre :
en réponse à la suppression de l'une du sous-ensemble d'identifications de points d'accès sans fil de la liste après la transmission du sous-ensemble, la transmission (1519) d'une mise à jour au noeud de communication (1101a) indiquant la suppression de l'une du sous-ensemble d'identifications de points d'accès sans fil.

4. Procédé selon l'une quelconque des revendications 1 à 3, comprenant en outre :
en réponse à l'ajout d'une nouvelle identification de point d'accès sans fil à la liste après la transmission du sous-ensemble, la détermination (1517) si la nouvelle identification de point d'accès sans fil doit être incluse dans le sous-ensemble ; et
en réponse à la détermination que la nouvelle identification de point d'accès sans fil doit être incluse dans le sous-ensemble, la transmission (1519) d'une mise à jour au noeud de communication (1101a) indiquant l'ajout de la nouvelle identification de point d'accès sans fil.

5. Procédé selon l'une quelconque des revendications 1 à 4, dans lequel la première technologie d'accès radio est une technologie d'accès de réseau local sans fil, WLAN, et dans lequel la deuxième technologie d'accès radio est une technologie d'accès d'évolution à long terme, LTE.

6. Procédé selon l'une quelconque des revendications 1 à 5, comprenant en outre :
en réponse à la réception de la demande de configuration d'interface, l'établissement (1531) d'une interface entre le noeud de terminaison (1001) et le noeud de communication (1101a) ; et
après l'établissement de l'interface, la réception (1533) de données de liaison descendante sur l'interface en provenance du noeud de communication (1101a) ; et
après la réception des données de liaison descendante, la transmission (1535) des données de liaison descendante à destination de l'un respectif des points d'accès sans fil (1201) pour une transmission sans fil à destination d'un terminal sans fil.

7. Procédé selon la revendication 6, dans lequel l'interface comprend une interface Xw.

8. Noeud de terminaison (1001) destiné à être utilisé en connexion avec une pluralité de points d'accès sans fil (1201), dans lequel le noeud de terminaison est apte à effectuer :
la fourniture d'une liste d'identifications de points d'accès sans fil, dans lequel chacune des identifications de points d'accès sans fil correspond à l'un respectif de la pluralité de points d'accès sans fil (1201) connectés au noeud de terminaison (1001) ;
la réception d'une demande de configuration d'interface au noeud de terminaison (1001) en provenance d'un noeud de communication (1101a) d'un réseau de communication sans fil, dans lequel la pluralité de points d'accès sans fil (1201) fournissent des communications sans fil en fonction d'une première technologie d'accès radio, et dans lequel le noeud de communication (1101a) comprend une station de base qui fournit des communications sans fil en fonction d'une deuxième technologie d'accès radio différente de la première technologie d'accès radio ; et
la transmission d'un sous-ensemble des identifications de points d'accès sans fil de la liste au noeud de communication (1001) en réponse à la réception de la demande de configuration d'interface en provenance du noeud de communication (1101a) du réseau de communication sans fil, dans lequel le noeud de terminaison est en outre apte à effectuer :
l'identification du sous-ensemble des identifications de points d'accès sans fil de la liste comme étant des identifications de points d'accès sans fil pour des points d'accès sans fil qui sont pertinents pour le noeud de communication (1101a) du réseau de communication sans fil en réponse à la réception de la demande de configuration d'interface au noeud de terminaison (1001), et **caractérisé en ce que**
l'identification du sous-ensemble comprend l'identification du sous-ensemble des identifications de points d'accès sans fil de la liste comme étant des identifications de points d'accès sans fil pour des points d'accès sans fil qui sont dans une zone de couverture du noeud de communication (1101a) du réseau de communication sans fil.

9. Noeud de terminaison (1001) selon la revendication 8, dans lequel la demande de configuration d'interface inclut une identification du noeud de communication (1101a) du réseau de communication sans fil, et dans lequel l'identification du sous-ensemble des identifications de points d'accès sans fil comprend l'identification du sous-ensemble d'identifications de points d'accès sans fil sur la base de l'identification du noeud de communication (1101a).

10. Noeud de terminaison (1001) selon la revendication 8 ou 9, dans lequel le noeud de terminaison est en outre apte à effectuer :
la transmission d'une mise à jour au noeud de communication (1101a) indiquant la suppression de l'une du sous-ensemble d'identifications de points d'accès sans fil en réponse à la suppression de l'une du sous-ensemble d'identifications de points d'accès sans fil de la liste après la transmission du sous-ensemble.

11. Noeud de terminaison (1001) selon l'une quelconque des revendications 8 à 10, dans lequel le noeud de terminaison est en outre apte à effectuer :
la détermination si une nouvelle identification de point d'accès sans fil doit être incluse dans le sous-ensemble en réponse à l'ajout de la nouvelle identification de point d'accès sans fil à la liste après la transmission du sous-ensemble ; et
la transmission d'une mise à jour au noeud de communication (1101a) indiquant l'ajout de la nouvelle identification de point d'accès sans fil en réponse à la détermination que la nouvelle identification de point d'accès sans fil doit être incluse dans le sous-ensemble.

12. Noeud de terminaison (1001) selon l'une quelconque des revendications 8 à 11, dans lequel la première technologie d'accès radio est une technologie d'accès de réseau local sans fil, WLAN, et dans lequel la deuxième technologie d'accès radio est une technologie d'accès d'évolution à long terme, LTE.

13. Noeud de terminaison (1001) selon l'une quelconque des revendications 8 à 12, dans lequel le noeud de terminaison est en outre apte à effectuer :
l'établissement d'une interface entre le noeud de terminaison (1001) et le noeud de communication (1101a) en réponse à la réception de la demande de configuration d'interface ; et
la réception de données de liaison descendante sur l'interface en provenance du noeud de communication (1101a) après l'établissement de l'interface ; et
la transmission des données de liaison descendante à destination de l'un respectif des points d'accès sans fil (1201) pour une transmission sans fil à destination d'un terminal sans fil après la réception des données de liaison descendante.

14. Noeud de terminaison (1001) selon la revendication 13, dans lequel l'interface comprend une interface Xw.
